# EUROPEAN PATENT APPLICATION

(11) **EP 1 321 657 A2**
(43) Date of publication of application: **25.06.2003**
(21) Application number: 02258628.3
(22) Date of filing: 13.12.2002
(51) Int. Cl.: F02K 9/58, F02C 9/26, G05D 7/00, F16K 3/32

(54) **Reduced gain thrust control valve**

(30) Priority: 21.12.2001 US 26322
(71) Applicant: UNITED TECHNOLOGIES CORPORATION, Hartford, CT 06101 (US)
(72) Inventor: Avampato, Tim Joseph, South Windsor, Connecticut 06074 (US); Bautista, Antony, Harvest, Alabama 35749 (US); Tepper, Beth Ellen, Riviera Beach, Florida 33404 (US)
(74) Representative: Leckey, David Herbert

(57) **Abstract**

A reduced gain thrust control valve (10) for use in a rocket engine comprises a housing (12) with a fluid inlet and a piston and cylinder unit (14) for controlling a fluid output of the control valve (10). The cylinder (15) has at least one metering element (30) formed therein. The at least one metering element (30) has a rectangular portion (32) for producing improved control stability, a tee and slot portion (34) for controlling thrust during a start transient engine phase, and a fixed turbine bypass portion (36) for accommodating a classed retainer (38). The classed retainer (38) incorporates a controlling orifice (40) which produces repeatable fixed bypass flow metering.

## Description

### BACKGROUND OF THE INVENTION

The present invention relates to a reduced gain thrust control valve for use in high powered expander cycle rocket engines.

Existing thrust control valves used in rocket engines exhibit oscillatory characteristics at all operating conditions. Further, they exhibit non-repeatable control of turbine fixed bypass flow metering. Rocket engines utilizing the existing thrust control valves are subject to rejection because of high amplitude control oscillations and increased 1E vibration levels, and inconsistent results from hardware changes intended to adjust the fixed turbine bypass flow rate.

### SUMMARY OF THE INVENTION

Accordingly, it is an object of the present invention in its preferred embodiments at least to provide an improved reduced gain thrust control valve for use in rocket engines.

It is a further object of the present invention in its preferred embodiments at least to provide a reduced gain thrust control valve which eliminates control oscillations, reduces 1E vibration levels, and lessens the severity of internal turbomachinery wear mechanisms.

In accordance with the present invention, a reduced gain thrust control valve for use in a rocket engine broadly comprises a housing having a fluid inlet and a piston and cylinder unit for controlling a fluid output of the control valve. The cylinder has at least one metering element formed therein. Each metering element comprises a first means for producing improved control stability, second means for controlling thrust during a start transient engine phase, and third means for accommodating a classed retainer.

Other details of the reduced gain thrust control valve of the present invention, as well as other advantages attendant thereto, are set forth in the following detailed description and the accompanying drawings wherein like reference numerals depict like elements.

### BRIEF DESCRIPTION OF THE DRAWINGS

FIG. 1 is a side view of a thrust control valve in accordance with the present invention.
FIG. 2 is a sectional view of a thrust control valve in accordance with the present invention;
FIG. 3 is an end view of the thrust control valve of the present invention;
FIG. 4 is a side view of a portion of a cylinder used in the thrust control valve of FIG. 1 having at least one metering element; and
FIG. 5 is a side view of a retainer used in the thrust control valve of FIG. 1.

### DETAILED DESCRIPTION OF THE PREFERRED EMBODIMENT(S)

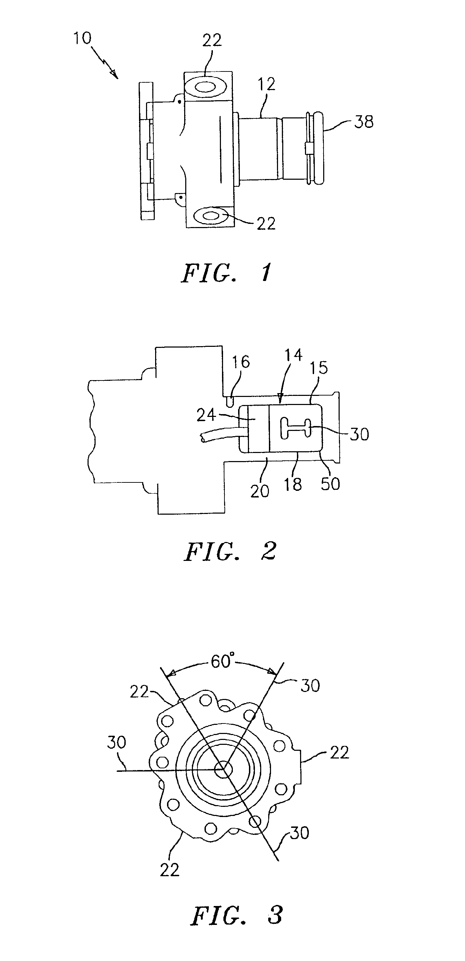

Referring now to the drawings, FIGS. 1 - 3 illustrate a reduced gain thrust control valve 10 in accordance with the present invention. The thrust control valve 10 has a housing 12 and a piston-cylinder unit 14 spaced from an inner wall 16 of the housing. The inner wall 16 and the wall 18 of the cylinder 15 define an annular space 20 through which fluid can flow when the valve 10 is closed. The housing 12 has three equi-spaced, single slot inlet port(s) 22 for allowing a fluid to enter the annular space 20.

Referring now to FIG. 2, the piston and cylinder unit 14 includes an axially movable piston 24 and a cylinder 15. The cylinder 15 has three metering elements 30 machined or formed into the wall 18. As shown in FIG. 3, each metering element 30 is offset from one of the inlet ports 22 by an angle of sixty degrees.

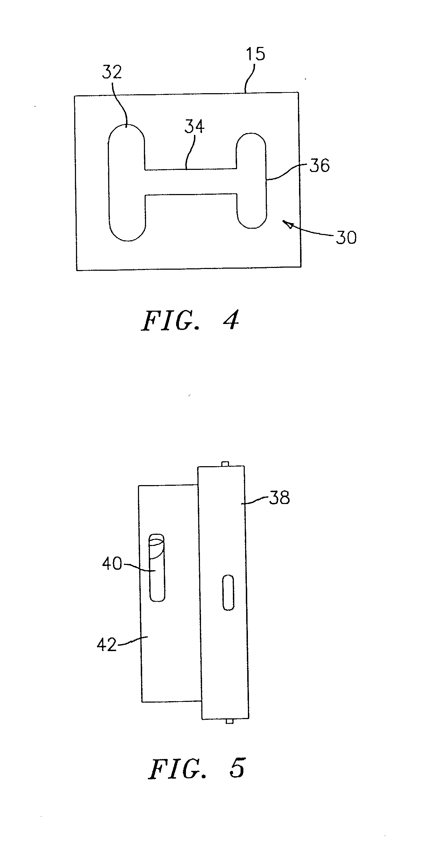

Referring now to FIG. 4, each metering element 30 includes a rectangular portion 32 for producing control stability improvements. The rectangular portion 32 is designed and dimensioned to provide control stability margin and a sufficient steady state operating range for all high powered rocket engine models.

Each metering element 30 further has a tee and slot portion 34. This portion controls thrust during an engine start transient. Still further, each metering element 30 has a fixed turbine bypass portion 36 which accommodates a classed retainer 38 which incorporates a controlling orifice 40 so as to produce repeatable fixed bypass flow metering.

The retainer 38 used in the thrust control valve 10 is illustrated in FIG. 5. The retainer 38 has a plurality of controlling orifices 40 machined in its side wall 42. The number of controlling orifices 40 present in the retainer 38 is equal to the number of metering elements 30 in the cylinder wall 18. Each orifice 40 cooperates with a respective fixed turbine bypass portion 36. The retainer 38 may be secured to the housing 12 using any suitable means known in the art. For example, the retainer 38 may be secured to the housing 12 using a fixed bayonet approach in which the retainer 38 is spring loaded and twisted into position within the housing 12. Different retainers 38 having different sized openings 40 may be used for different types of rocket engines, hence the name classed retainer.

In operation, the piston 24 is pneumatically actuated and moves between an initial position where it completely covers each of the metering elements 30 and other positions where the piston 24 does not cover all or some of the metering elements 30. When the piston 24 is in an initial position, covering all of the metering elements 30, fluid can not flow into the interior of the cylinder 15. As a result, fluid entering the housing 12 flows into the annular space 20 and exits the valve 10 via opening 50.

When the valve 10 is opened, it bypasses flow (power) around the turbine (not shown) to which it is attached. When the valve 10 is fully closed, maximum thrust is produced. At 100% power, the position of the piston 24 is modulated within the vertical rectangle portion of the metering element 30. The top of the tee portion of the metering element 30 is only uncovered during startup to provide much more control authority to control this very rapid transient condition. The slots are always uncovered and used to compensate for engine to engine variations.

As can be seen from the foregoing description, the thrust control valve described incorporates a number of metering element features that result in a significant improvement in the operational characteristics and control of high powered expander cycle rocket engines. The design of each metering element 30 results in stable control operation at all combinations of operating conditions, accurate control of fixed turbine bypass flow metering, and acceptable start transient control under all operating conditions. The metering elements of the present invention eliminate control oscillations, reduce 1E vibration levels, and lessens the severity of internal turbomachinery wear mechanisms resulting in significant improvements in expander cycle control and in engine quality and producibility.

While it is preferred that the valve housing 12 have three inlet ports 22, if desired less than three or more than three inlet ports may be provided in the housing 12. Also, while it is preferred that there be three metering elements 30 in the cylinder wall 18, there may be, if desired, less than three or more than three metering elements 30.

It is apparent that there has been described above a reduced gain thrust control valve which fully satisfies the objects, means, and advantages set forth hereinbefore. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

## Claims

1. A reduced gain thrust control valve (10) for use in a rocket engine comprising:
a housing (12) having a fluid inlet;
a piston and cylinder unit (14) for controlling a fluid output of said control valve;
said cylinder (15) having at least one metering element (30) formed therein; and
said at least one metering element (30) comprising first means (32) for producing improved control stability, second means (34) for controlling thrust during a start transient engine phase, and third means (36) for accommodating a classed retainer (38).

2. A reduced gain thrust control valve according to claim 1, wherein said at least one metering element (30) is machined into said cylinder (15).

3. A reduced gain thrust control valve according to claim 1 or 2, wherein said cylinder (15) has a plurality of said metering elements (30) machined therein.

4. A reduced gain thrust control valve according to any preceding claim, wherein said first means comprises a rectangular portion (32).

5. A reduced gain thrust control valve according to any preceding claim, wherein said second means comprises a tee and slot portion (34).

6. A reduced gain thrust control valve according to any preceding claim, wherein said third means comprises a fixed turbine bypass portion (36).

7. A reduced gain thrust control valve according to any preceding claim, wherein said classed retainer (38) has at least one controlling orifice (40) therein.

8. A reduced gain thrust control valve according to any preceding claim, wherein said classed retainer (38) has a plurality of orifices (40) equal in number to the number of said metering elements (30).

9. A reduced gain thrust control valve according to any preceding claim, wherein said cylinder (15) is spaced from an inner wall (16) of said housing (12) and wherein when said piston (24) is in a first position where said piston (24) covers said at least one metering element (30) fluid entering said valve flows in an annular space (20) between said cylinder (15) and said inner wall (16).

10. A reduced gain thrust control valve according to claim 9, wherein fluid flows through said at least one metering element (30) into the interior of said cylinder (15) and out through an end of said cylinder (15) as said piston (24) moves from said first position towards a retracted position.

11. A metering element (30) for use in a reduced gain thrust control valve for an engine comprising:
a rectangular portion (32) for providing control stability margin and a steady state operating range for said engine;
a tee and slot portion (34) for controlling thrust during an engine start transient; and
a fixed turbine bypass portion (36) for accommodating a classed retainer incorporating a controlling orifice which produces repeatable fixed bypass flow metering.
